# EUROPEAN PATENT SPECIFICATION

(11) **EP 2 433 348 B1**
(45) Date of publication and mention of the grant of the patent: **06.03.2019**
(21) Application number: 10720401.8
(22) Date of filing: 12.05.2010
(51) Int. Cl.: H02K 1/27

(54) **AN ELECTRIC MOTOR HAVING A PERMANENT MAGNET ROTOR**
ELEKTROMOTOR MIT EINEM PERMANENTMAGNETROTOR
MOTEUR ÉLECTRIQUE COMPRENANT UN ROTOR À AIMANTS PERMANENTS

(30) Priority: 22.05.2009 TR 200903969
(43) Date of publication of application: 28.03.2012
(73) Proprietor: Arçelik Anonim Sirketi, 34950 Istanbul (TR)
(72) Inventor: ALBAS, Gunsu, Cirpanli, 34950 Istanbul (TR); AYVAZOGLU, Cumhur, 34950 Istanbul (TR)
(86) International application number: PCT/EP2010/056560
(87) International publication number: WO 2010/133496

(56) References cited:
- EP-A2- 0 143 693
- IT-A- N200 700 26U
- JP-A- 2005 333 762
- JP-A- 2005 354 768
- US-A1- 2009 001 838

## Description

The present invention relates to an electric motor having a permanent magnet motor according to the preamble of claim 1, such as known from IT N200 700 26U A.

In electric motors, for example, in brushless direct current motors, permanent magnet rotors are used wherein magnet pieces generating magnetic flux are integrated onto the rotor stack consisting of laminations secured over a shaft. Magnets are integrated to the rotor stack by being embedded into the rotor stack or by being adhered to the rotor outer surface by methods such as adhering and injection. The surface magnets integrated to the rotor surface generally have an arc segment and are adhered to the rotor surface peripherally at equal intervals by leaving air gaps that will prevent flux leakage between each other, or are assembled thereto by another method. Since assembling the magnets to the outer surface of the rotor by merely adhering them is not sufficient in terms of resisting against centrifugal forces, in some embodiments, support members that extend from the rotor towards between the magnets are used between the magnets disposed on the rotor surface. Since the magnet retaining support members are shaped as an extension of the rotor produced from ferromagnetic material that easily conducts magnetic flux, they cause flux leakage between the magnets and therefore, the performance of the motor decreases. In some embodiments, magnets are fastened to the outer surface of the rotor by a non-magnetic spring or a cylindrical sleeve; however, the said spring or sleeve covers the outer surface of the magnets disposed on the outer surface of the rotor and occupies space in the air gap between the stator inner surface and the rotor, and therefore causes the performance of the electric motor to decrease.

In the Patent Document No. US5345669, magnets are adhered onto the rotor and projections that are suitable for the side forms of the magnets are situated on the rotor surface. A sheet metal lamination is secured onto the adhered magnets and a ring is secured at the lower and upper sides of the rotor stack, and thus, the movement of the magnets around the vertical axis is prevented.

In the Patent Document No. US6084330, a close-fit sheet metal sleeve is mounted onto the magnets and spring members are mounted between the magnets and the channels on the rotor surface. The spring members prevent the magnets from moving between the rotor and the sheet metal sleeve, and the magnets are fixed at the vertical axis by screwing covers to the lower and upper sides of the rotor stack.

In the Patent Document No. US4954736, the magnets are disposed into the gaps in the rotor stack and the magnets are provided to be fixed by applying plastic injection into the gaps remaining between the rotor stack and the magnet.

In the United States of America Patent Document No. US6732986, magnets are disposed into the channels on the rotor surface, and the notches on the outer surface of the rotor are deformed towards the magnets, so that the magnets are provided to be fixed to the rotor surface.

In the United States of America Patent Document No. US6492755, magnets are fixed to the outer surface of the core of the rotor by means of springs that are mounted into the grooves situated in the core of the rotor and that surround the magnet outer surfaces facing the stator.

In the German Patent Document No. DE19942029, magnets are fixed to the outer surface of the core of the rotor by means of spring clamp clips.

The European Patent Application No: EP0143693 relates to a rotor for a permanent magnet electric motor, including a stack of rotor laminations and arcuate permanent magnets are positioned on the peripheral surface of the stack.

The Japanese Patent Application Document No: JP2005333762 relates to a rotating electric machine and its rotor.

The Japanese Patent Application Document No: JP2005354768 relates to a surface magnet type magnetic field rotor and motor utilizing it which prevents a magnetic circuit characteristic from degrading.

The aim of the present invention is the realization of an electric motor which has a permanent magnet-type rotor and wherein the assembly of the magnets to the rotor is made easier.

The electric motor realized in order to attain the aim of the present invention is explicated in the claims.

In the electric motor of the present invention, magnets are fastened adjacently onto the outer surface of the rotor along the periphery thereof at equal intervals and parallel slots are situated that extend longitudinally between adjacent magnets in the axial direction around the rotor. V-shaped prestressed springs that are mounted to the slots are used for fastening the magnets to the outer surface of the rotor.

The spring that is mounted to each slot on the rotor surface has two arms which form a V-shape by opening from the outer surface of the rotor towards the outside to the sides in the radial direction, and each of which bears against the lateral surface of the adjacent magnet, and has a curve which joins the two arms and provides them to be mounted to the slot, and has two extensions which are provided by bending the arm ends at the outside to the left and right and which rest against the edge portions of the upper surfaces, facing the stator, of the magnets at their left and right.

In a first alternative, the spring has stoppers which are located at each arm of the spring, and which rest against the front and back planar magnet surfaces and also front and back planar rotor surfaces, and which prevent the magnets from sliding in the axial direction.

In a second alternative, the spring has aperture-shaped cut outs which are located at each arm of the spring and which provide the weight of the spring to be reduced and furthermore, the arms to be easily stretched and thus, the spring to be attached to the rotor and to be detached therefrom.

By means of the extensions, the spring retains the magnets situated at its both sides from their upper surface edges facing each other and thus, prevents them from leaving the outer surface of the rotor by the effect of the centrifugal force.

In an embodiment of the present invention, the extensions at the end of the spring are shaped as strips which apply pressure only at the edge portions of the upper surfaces of the magnets and to a narrow area. Since the extensions do not cover the active upper surface, facing the stator, of the magnets completely, an improvement at the magnetic interaction between the rotor and the stator is provided.

In an embodiment of the present invention, the spring has extensions, which are configured to get narrower from the edge towards the inside, on the upper surfaces of the magnets at its left and right. Thus, in the air gap situated between the magnets and the stator, the extensions are prevented from forming a protrusion from the upper surface of the magnets towards the inner surface of the stator, and hence the air gap is provided to be proper.

In another embodiment of the present invention, the magnet has recesses which are located at both edges of the upper surface of the magnet and which have a depth that provides the extensions at the left and the right of the magnet to rest in the air gap such that they will not form a protrusion towards the stator.

In another embodiment of the present invention, the rotor is hexagonal shaped and six magnets are disposed to the planar surfaces around the rotor, and the springs are mounted to the slots which are opened on the rotor outer surface, on the edges extending longitudinally in the axial direction of the hexagonal shape.

The spring of the present invention can be used in electric motors that are produced uniformly and that have varying numbers of magnets and varying shapes of magnets, and can be mounted to the rotor easily by hand operation during the production, and contributes to the reduction of the noise of the electric motor.

The electric motor realized in order to attain the aim of the present invention is illustrated in the attached claims, where:
Figure 1 - is the schematic view of an electric motor.
Figure 2 - is the perspective view of a magnet retaining spring.

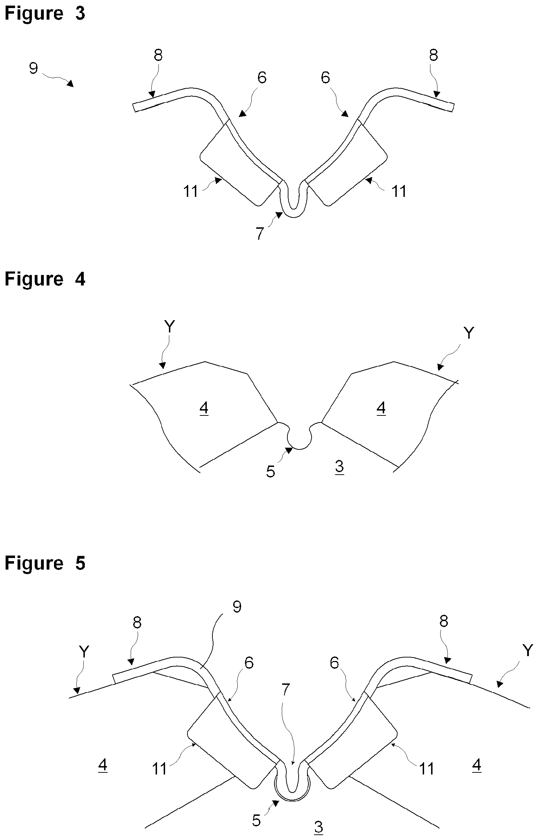

Figure 3 - is the front view of a magnet retaining spring.
Figure 4 - is the schematic view of a rotor, two adjacent magnets and the slot providing the magnet retaining spring to be mounted onto the rotor.
Figure 5 - is the schematic view of detail D in Figure 1.
Figure 6 - is the schematic view of a rotor, two adjacent magnets and a magnet retaining spring that comprises retaining extensions which are configured to get narrower, in an embodiment of the present invention.
Figure 7 - is the schematic view of a rotor and two magnets whereon recesses are located, in another embodiment of the present invention.

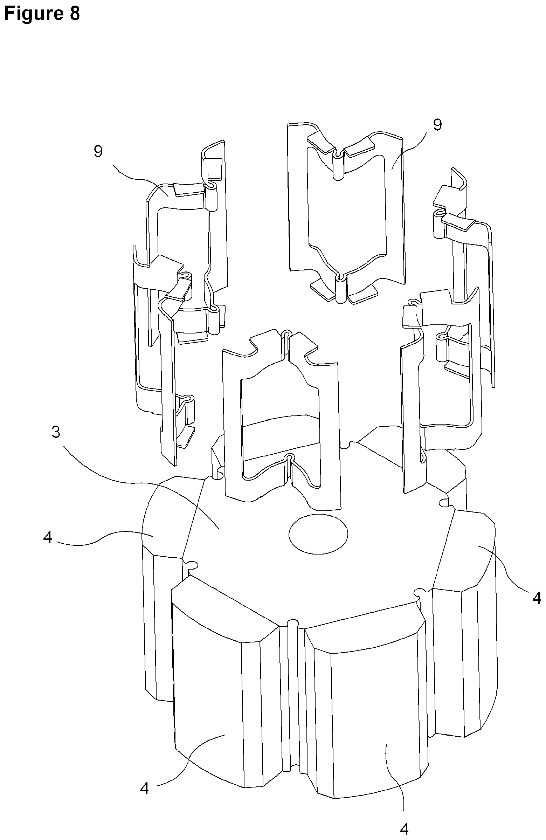

Figure 8 - is the perspective view of a rotor whereon magnets are located, and of magnet retaining springs when not mounted thereon.

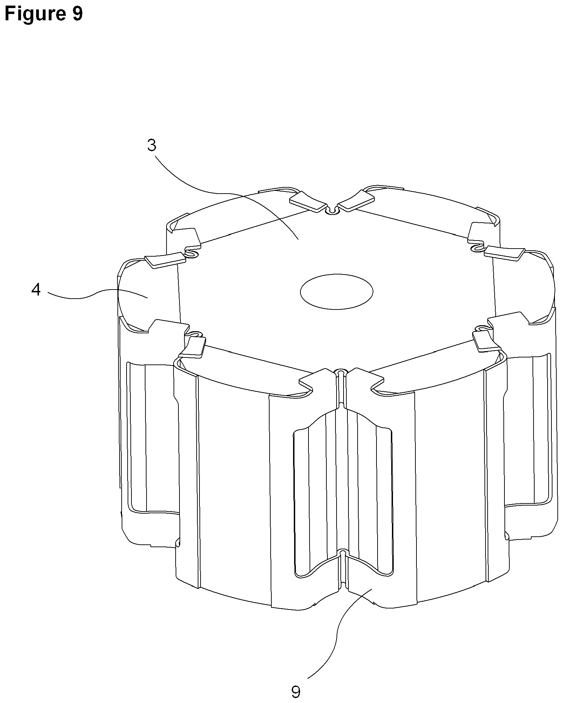

Figure 9 - is the perspective view of a rotor whereon magnets are located, and of magnet retaining springs when mounted thereon.

The elements illustrated in the figures are numbered as follows:
1 - Electric motor
2 - Stator
3 - Rotor
4 - Magnet
5 - Slot
6 - Arm
7 - Curve
8 - Extension
9 - Spring
10 - Recess
11 - Stopper
12 - Cut out

The electric motor (1) comprises a stator (2) which forms the fixed portion of the electric motor (1), a permanent magnet rotor (3) which moves inside the stator (2) and which is produced from lamination package or from massive or powder metal, more than one magnet (4) which are fastened adjacently onto the outer surface of the rotor (3) along the periphery thereof at equal intervals, and more than one parallel slot (5) which extends longitudinally between both adjacent magnets (4) in the axial direction on the outer surface of the rotor (3).

The electric motor (1) of the present invention comprises more than one non-magnetic magnet (4) retaining spring (9)
- that is mounted to the slot (5) by being disposed between two adjacent magnets (4) in a prestressed manner,
- that has two arms (6) which form a V-shape by opening from the outer surface of the rotor (3) towards the outside to the sides in the radial direction and each of which bears against the lateral surface of the adjacent magnet (4) when mounted to the slot (5), and that has a curve (7) which joins the two arms (6) and which is mounted to the slot (5), and that has two extensions (8) which are provided by bending the arm (6) ends at the outside to the sides and which rest against the edge portions of the upper surfaces (Y), facing the stator (2), of the magnets (4) at their left and right.

By means of the extensions (8), the spring (9) retains the magnets (4) from their upper surface (Y) edges facing each other and thus, prevents them from leaving the outer surface of the rotor (3) by the effect of the centrifugal force.

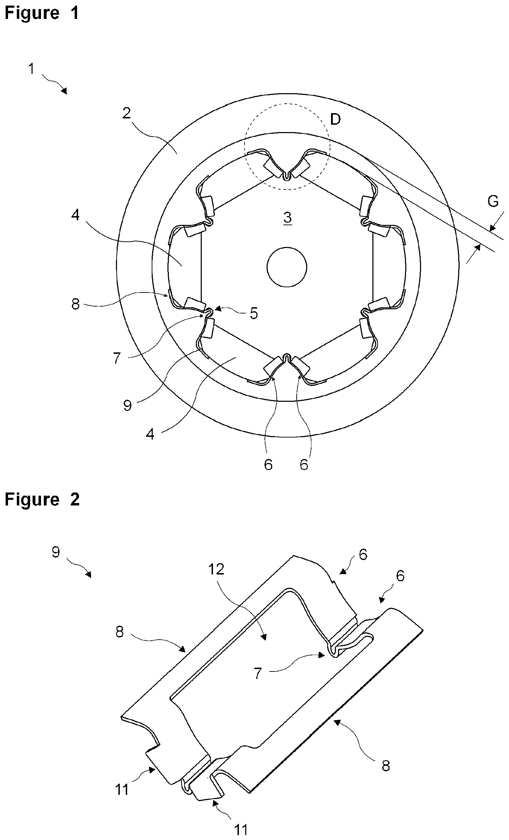

In an example, the spring (9) has strip-shaped extensions (8) which apply pressure to a narrow area on the edges of the upper surfaces (Y), facing the stator (2), of the magnets (4) at both sides, and which extend along the magnet (4) in the axial direction (Figure 2). The spring (9) retains the magnets (4) at its both sides only from the edge portions of their upper surfaces (Y) and thus, prevents them from leaving the outer surface of the rotor (3) by the effect of the centrifugal force. Since the extensions (8) do not cover the active upper surface (Y), facing the stator (2), of the magnets (4) completely, an improvement at the magnetic interaction between the rotor (3) and the stator (2) is provided and the production of the spring (9) is facilitated. The spring (9) is not required to be formed in exact compliance with the shape of the magnets (4) while being produced, and cost advantage is provided by producing uniform V-shaped springs (9) with a simple structure. Desired number of springs (9) of the same type can be used without requiring to change the shape of the springs (9) when a design change is performed in the electric motor (1), for example, even if the number of poles and hence the number of magnets (4) are changed.

By means of the V-shape of the magnet retaining spring (9) which can be stretched by bringing the arms (6) close to each other, the magnet retaining spring (9) is mounted to the rotor (3) easily by had operation, thus, special apparatus are not needed. In the known technique, magnet retaining elements can be mounted to the rotor (3) only by means of special apparatus and by being pressed in the axial direction, whereas in the electric motor (1) of the present invention, the spring (9) can be attached to the rotor (3) and detached therefrom in the radial direction. While the spring (9) is mounted to the rotor (3), the arms (6) forming the V-shape are disposed between the magnets (4) by being brought closer to each other and the curve (7) at the joint end of the V-shape is mounted inside the slot (5). Afterwards, the arms (6) are released and thus, they bear against the lateral surfaces of the magnets (4) at their both sides and the curve (7) rests against the inner walls of the slot (5). Thus, the spring (9) is locked to the outer surface of the rotor (3) between two magnets (4) by being mounted to the slot (5) by means of the curve (7) joining the arms (6). When the spring (9) is desired to be removed from the rotor (3), the arms (6) are brought together again, thus, the curve (7) is provided to be released from the slot (5), and the spring (9) is removed from the rotor (3) by being pulled out in the radial direction.

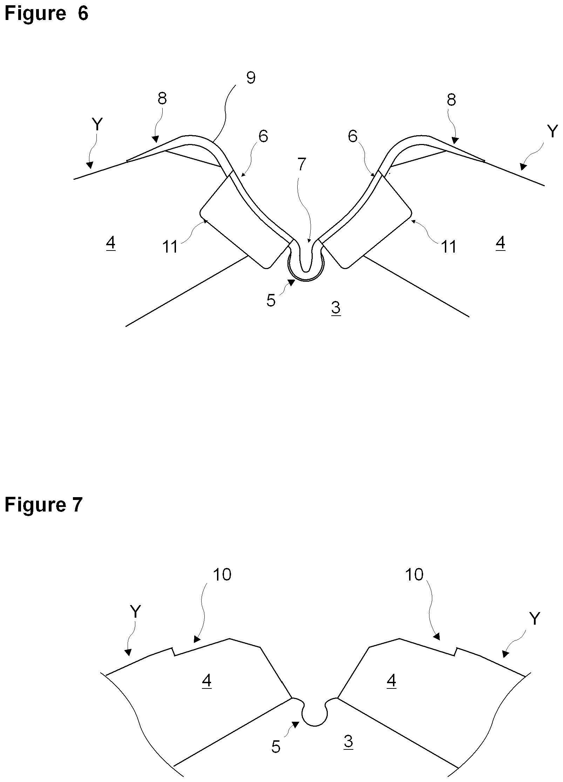

In an example, the spring (9) has extensions (8), which are configured to get narrower from the edge towards the inside, on the upper surfaces (Y) of the magnets (4) at its left and right (Figure 6). Thus, the extensions (8) are provided not to form a protrusion in the air gap (G), situated between the magnets (4) and the stator (2), from the upper surface (Y) of the magnets (4) towards the inner surface of the stator (2), the measurement of the air gap (G) remains constant between the magnet (4) upper surface (Y) and the stator (2) and by means of the proper air gap (G) that is not occupied by the extensions (8), the noises generated at high rotational speeds of the rotor (3) are reduced.

In another embodiment of the present invention, the magnet (4) has two recesses (10) which are located at both edges of the upper surface (Y) of the magnet (4) and which have a depth that provides the extensions (8) at the left and the right of the magnet (4) to rest in the air gap (G) such that they will not form a protrusion towards the stator (2) (Figure 7).

In a first alternative, the spring (9) has more than one stopper (11) that is located at each arm (6) of the spring (9), and that rests against the front and back surfaces of the magnet (4), against which the arm (6) bears, and also front and back planar surfaces of the rotor (3), and that prevents the magnets (4) from sliding in the axial direction on the rotor (3) (Figure 2)

In a second alternative, the spring (9) has one or more cut outs (12) which are located at each arm of the spring (9) and
which provide the weight of the spring (9) to be reduced and furthermore, the arms (6) to be easily stretched and thus, the spring (9) to be attached to the rotor (3) and to be detached therefrom (Figure 2).

In another embodiment of the present invention, the rotor (3) is hexagonal shaped and six magnets (4) are disposed to each outer surface around the rotor (3), and the springs (9) are mounted to the slots (5) which are opened on the rotor (3) outer surface, on the edges extending longitudinally in the axial direction of the hexagonal shape.

The spring (9) of the present invention can be used in electric motors (1) that are produced uniformly and that have varying numbers of magnets (4) and varying shapes of magnets (4), and can be mounted to the rotor (3) easily by hand operation during the production, and contributes to the reduction of the noise of the electric motor (1).

It is to be understood that the present invention is not limited by the embodiments disclosed above and an expert in the technique can easily introduce different embodiments. These should be considered within the scope of the protection postulated by the claims of the present invention.

## Claims

1. An electric motor (1) comprising a stator (2) which forms the fixed portion of the electric motor (1), a permanent magnet rotor (3) which moves inside the stator (2), more than one magnet (4) which are fastened adjacently onto the outer surface of the rotor (3) along the periphery thereof at equal intervals, and more than one parallel slot (5) which extends longitudinally between both adjacent magnets (4) in the axial direction on the outer surface of the rotor (3), more than one spring (9), mounted to the slots (5) by being disposed between two adjacent magnets (4) in a prestressed manner and two arms (6) which form a V-shape by opening from the outer surface of the rotor (3) towards the outside to the sides in the radial direction and each of which bears against the lateral surface of the adjacent magnet (4) when mounted to the slot (5), - a curve (7) which joins the two arms (6) and which is mounted to the slot (5) and - two extensions (8) which are provided by bending the arm (6) ends at the outside to the sides and which rest against the edge portions of the upper surfaces (Y), facing the stator (2), of the magnets (4) at their left and right, **characterized by** the spring (9) comprising more than one stopper (11) that is located at each arm (6) of the spring (9), and that rests against the front and back planar surfaces of the magnet (4), against which the arm (6) bears, and also front and back planar surfaces of the rotor (3), and that prevents the magnets (4) from sliding in the axial direction on the rotor (3)
and/or
**by** the spring (9) comprising one or more cut outs (12) which are located at each arm of the spring (9) and which provide the weight of the spring (9) to be reduced and furthermore, the arms (6) to be easily stretched and thus, the spring (9) to be attached to the rotor (3) and to be detached therefrom.

2. The electric motor (1) as in Claim 1, **characterized by** the spring (9) comprising strip-shaped extensions (8) which apply pressure to the edges of the upper surfaces (Y), facing the stator (2), of the magnets (4) at both sides, and which extend along the magnet (4) in the axial direction.

3. The electric motor (1) as in Claim 1 or 2, **characterized by** the magnet (4) comprising two recesses (10) which are located at both edges of the upper surface (Y) of the magnet (4) and which have a depth that provides the extensions (8) at the left and the right of the magnet (4) to rest in the air gap (G) such that they will not form a protrusion towards the stator (2).

4. The electric motor (1) as in any one of the above Claims, **characterized by** the hexagonal-shaped rotor (3), six magnets (4) that are disposed to each outer surface of the rotor (3), and the slots (5) that are opened on the rotor (3) outer surface, on the edges extending longitudinally in the axial direction of the hexagonal shape.

## Patentansprüche

1. Ein Elektromotor (1) umfasst einen Stator (2), der den festen Abschnitt des Elektromotors (1) bildet, einen Permanentmagnetrotor (3), der sich im inneren des Stators (2) bewegt, mehrere Magnete (4), die an der Außenfläche des Rotors (3) angrenzen und entlang dessen Umfang in gleichen Abständen befestigt sind, mehr als einen parallelen Schlitz (5), der sich in Längsrichtung zwischen den beiden benachbarten Magneten (4) in axialer Richtung an der Außenfläche des Rotors (3) erstrecken, mehrere Feder (9), die an den Schlitzen (9) montiert sind, indem sie zwischen zwei benachbarten Magneten (4) vorgespannt sind und an zwei Armen (6) angeordnet sind, die durch das Öffnen von außen eine V-Form an der Oberfläche des Rotors (3) bilden. Die Oberfläche des Rotors (3) nach außen zu den Seiten in radialer Richtung kann bewegt werden und jede von ihnen liegt an der seitlichen Oberfläche des benachbarten Magneten (4) an, wenn er an dem Schlitz (5) montiert ist bildet sich eine Kurve (7), die mit den beiden Armen (6) verbindet sind und an dem Schlitz (5) montiert sind und zwei Verlängerungen (8), die durch das Biegen der Arme (6) vorgesehen sind, endend an den Außenseiten zu den Seiten und die an den Randabschnitten der oberen Flächen (Y), die zu dem Stator (2) gewandt sind, der Magneten (4) an ihrer linken und rechten Seite anliegen, **sind dadurch gekennzeichnet, dass** die Feder (9) mehr als einen Anschlag (11) aufweist, der an jedem Arm (6) der Feder (9) angeordnet ist und der an den vorderen und hinteren ebenen Flächen des Magneten (4) anliegen und an deren Arm (6) anliegt und auch an der vorderen und hinteren ebenen Fläche des Rotors (3). Somit verhindert es, dass die Magnete (4) in axialer Richtung auf dem Rotor (3) gleiten,
und/oder
**durch** die Feder (9), die eine oder mehrere Ausschnitte (12) aufweist, die an jedem Arm der Feder (9) angeordnet sind und das Gewicht der Feder (9) reduzieren, später die Arme (6) dazu leicht gedehnt werden und somit die Feder (9) am Rotor (3) befestigt damit sie von diesem gelöst werden können.

2. Der Elektromotor (1) wie bei Anspruch 1 aufgeführt, ist **dadurch gekennzeichnet, dass** die Feder (9) streifenförmige Verlängerungen (8) umfasst, die auf die dem Stator (2) zugewandten Kanten der oberen Flächen (Y) der magnetische Drucke ausüben (4), die an beiden Seiten und die entlang des Magneten (4) in axialer Richtung erstrecken.

3. Der Elektromotor (1), wie bei Ansprüchen 1 oder 2 aufgeführt, ist **dadurch gekennzeichnet, dass** der Magnet (4) zwei Aussparungen (10) aufweist, die sich an den zwei Kanten der oberen Oberfläche (Y) des Magneten (4) befinden. Zugleich weisen sie eine Tiefe auf, durch die die Verlängerungen (8) links und rechts des Magneten (4) im Luftspalt (G) liegen, so dass sie keinen Vorsprung in Richtung Stator (2) bilden,

4. Der Elektromotor (1), wie in einem der vorher aufgeführten Ansprüchen, ist **dadurch gekennzeichnet, dass** dem sechseckig geformten Rotor (3), sechs Magneten (4), die an jeder Außenfläche des Rotors (3) angeordnet sind und Schlitze (5), die an der Außenfläche des Rotors (3) geöffnet sind, wobei sich die Kanten in axialer Richtung der Form eines Sechskantes in Längsrichtung erstrecken.

## Revendications

1. Un moteur électrique (1) comprenant un stator (2) qui forme la partie fixe du moteur électrique (1), un rotor à aimant permanent (3) qui se déplace à l'intérieur du stator (2), plusieurs aimants (4) qui sont fixés à intervalles égaux sur la surface extérieure du rotor (3) le long de sa périphérie, de manière adjacente, et plusieurs rainures parallèles (5) qui se prolongent longitudinalement entre deux aimants adjacents (4) dans la direction axiale sur la surface extérieure du rotor (3), plusieurs ressorts (9), montés sur les rainures (5) en étant disposés entre deux aimants adjacents (4) d'une manière précontrainte et deux segments (6) qui forment une forme en V, qui en s'ouvrant de la surface extérieure du rotor (3) vers l'extérieur vers les côtés dans la direction radiale s'appuient chacun contre la surface latérale de l'aimant adjacent (4) lors du montage sur la rainure (5), - une courbure (7) qui relie les deux segments (6) et qui est montée sur la rainure (5) et - deux extensions (8) qui sont prévues en pliant latéralement vers l'extérieur les extrémités des segments (6) et qui reposent contre les bords des surfaces supérieures (Y) des aimants (4), à gauche et à droite, face au stator (2), **est caractérisé en ce que** le ressort (9) comprend plus d'un obturateur (11) qui est situé sur chaque segment (6) du ressort (9), et qui repose contre les surfaces planes avant et arrière de l'aimant (4), contre lesquelles le segment (6) repose, ainsi que les surfaces planes avant et arrière du rotor (3), ce qui empêche les aimants (4) de glisser dans la direction axiale sur le rotor (3)
et/ou
**par** le ressort (9) comprenant une ou plusieurs découpes (12) qui sont situées au niveau de chaque segment du ressort (9) et qui fournissent le poids du ressort (9) à réduire et en outre, les segments (6) à étirer facilement et donc, le ressort (9) à fixer au rotor (3) et à en être séparé.

2. Le moteur électrique (1) selon la déclaration 1, est **caractérisé en ce que** le ressort (9) comprend des prolongements en forme de bande (8) qui exercent une pression sur les bords des surfaces supérieures (Y) des aimants (4) des deux côtés, en regard du stator (2), et qui s'étendent dans la direction axiale de l'aimant (4).

3. Le moteur électrique (1) selon la déclaration 1 ou 2, est **caractérisé en ce que** l'aimant (4) comprend deux évidements (10) qui sont situés sur les deux bords de la surface supérieure (Y) de l'aimant (4) et qui ont une profondeur qui permet aux extensions (8) à gauche et à droite de l'aimant (4) de reposer dans la fente (G), de manière à éviter de faire saillie vers le stator (2).

4. Le moteur électrique (1) comme dans l'une quelconque des déclarations ci-dessus, est **caractérisé par** le rotor hexagonal (3), six aimants (4) qui sont disposés sur chaque surface extérieure du rotor (3), et les rainures (5) qui sont ouvertes sur la surface extérieure du rotor (3), sur les bords s'étendant longitudinalement en direction axiale par rapport à la forme hexagonale.
